(19) **Europäisches Patentamt**

**European Patent Office**

**Office européen des brevets**

(11) **EP 1 091 517 A1**

(12) **EUROPEAN PATENT APPLICATION**

(43) Date of publication:
**11.04.2001 Bulletin 2001/15**

(51) Int Cl.[7]: **H04L 1/00**, H04L 1/08

(21) Application number: **99119188.3**

(22) Date of filing: **07.10.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (71) Applicant: **SIEMENS AKTIENGESELLSCHAFT**<br>**80333 München (DE)**<br><br>(72) Inventor: **Raaf, Bernhard, Dipl.-Phys.**<br>**81475 München (DE)** |

(54) **Communication method and apparatus using punctured or repeated data**

(57)     Near optimum repetition or puncturing patterns are possible when applying rate matching after first interleaving. The presented algorithm in particular avoids that adjacent repeated bits are separated considerably more than the average repetition distance.

# FIG 1

Figures

| 0 | 1 | 2 | 3 | 4 | 5 | 6 | 7 |
|---|---|---|---|---|---|---|---|
| 8 | 9 | 10 | 11 | 12 | 13 | 14 | 15 |
| 16 | 17 | 18 | 19 | 20 | 21 | 22 | 23 |
| 24 | 25 | 26 | 27 | 28 | 29 | 30 | 31 |
| 32 | 33 | 34 | 35 | 36 | 37 | 38 | 39 |
| 40 | 41 | 42 | 43 | 44 | 45 | 46 | 47 |
| 48 | 49 | 50 | 51 | 52 | 53 | 54 | 55 |
| 56 | 57 | 58 | 59 | 60 | 61 | 62 | 63 |

EP 1 091 517 A1

**Description**

The present invention relates to data communications apparatus and methods for communicating data. More specifically, the present invention relates to data communications apparatus and methods of communicating data in which data is repeated.

Digital communications systems are arranged to communicate data by representing the data in a form which facilitates transmission of the data via a medium through which communication is effected. For example, in a case of radio communications, the data is represented as radio signals and transmitted between transmitters and receivers of the communications system via the ether. In the case of broadband telecommunications networks, the data may be represented as light and communicated via, for example, a fibre optic network between transmitters and receivers of the system.

During transmission of data, bits or symbols of the communicated data can be corrupted to the effect that these bits or symbols can not be correctly determined at the receiver. For this reason, the data communications systems often include means for mitigating the corruption of the data which occurs during transmission. One of these means is to provide transmitters of the system with encoders, which encode the data prior to transmission, in accordance with an error control code. The error control code is arranged to add redundancy to the data in a controlled way. At the receiver, errors occurring during transmission may be corrected by decoding the error control code, thereby recovering the original data. The decoding is effected using an error decoding algorithm corresponding to the error control code, which is known to the receiver.

After data has been encoded, there is often a requirement to puncture or repeat data bits or symbols from a block of encoded data before transmission of that data. The term repetition/puncturing as used herein refers to a process of repeating/cancelling or deleting bits from an encoded data block to the effect that the repeated / punctured bits are transmitted twice or even more often/not at all with that data block. Repetition or Puncturing might be required because, for example, a multiple access scheme, which serves to effect communication of the data via the data bearing media, requires the data to be formatted into blocks having a pre-determined size, which does not correspond to the size of the encoded data frame. In order to fit the encoded data frame into the transport data block of the pre-determined size, therefore, data bits from the encoded data frame are either punctured, to decrease the size of the encoded data block, in a case where the encoded data frame is larger than the size of the transport block, or bits of the encoded data frame are repeated in a case where the encoded data frame is smaller than the pre-determined size of the transport block.

As will be appreciated, the data frames may be transmitted un-encoded in the transport data block. In this case, it is not appropriate to puncture the data frame in order to fit the data frame into the transport data block, a plurality of transport data blocks must be used to convey the data frame. In a case where the data frame is smaller than the transport data block, then the data bits or symbols are repeated to an extent necessary to fill the remainder of the transport data block.

As is familiar to those skilled in the art, an effect of applying repetition to an encoded data frame, is that the probability of correctly recovering the original data is increased. Furthermore, the performance of known error control codes and decoders for these error control codes is best when the errors occurring during transmission of the data are caused by Gaussian noise, with an effect that the errors are independently distributed throughout the transport data block. Similarly, therefore, if an encoded data frame is to be repeated, the positions within the encoded data frame at which bits are repeated, should be distributed as evenly as possible. As such, the repeating positions should be evenly distributed throughout the frame. Similarly, because errors during transmission often occur in bursts, particularly in the case of radio communications systems which do not employ interleaving, positions within an encoded or an un-encoded data frame, at which data bits are to be repeated, should be arranged to be evenly separated throughout the frame.

Known methods of selecting the positions of bits or symbols to be repeated within an encoded data frame, include dividing the number of bits or symbols within a frame, by the number of bits or symbols to be repeated and selecting positions at integer values corresponding to the division. However, in a case where the number of bits to be repeated is not an integer division of the frame, an equi-distant separation of repeated positions does not result, providing the disadvantage that some positions may be separated by more than this integer.

The interleaving in the transport mulitplexing scheme is performed in two steps. It is believed that repetition will be necessary also in the uplink.. There is then a potential problem since if a block interleaver comprising column permutation as the FS-MIL is used in the uplink multiplexing scheme together with a state of the art rate matching algorithm, the performance could be degraded.

In the current version of the UMTS standard (3GPP TSG RAN WG1; Multiplexing and channel coding (FDD); TS 25.212 V2.3.0 (1999-10)) a scheme is included which has been presented in R1-99641; Siemens; Properties of optimised puncturing scheme; TSG-RAN WG1#5, June 1-4, Cheju, Korea, which distributes punctured bits as evenly as possible and in particular avoids cases where punctured bits come closer to each other than absolutely necessary. This is achieved even for the case when puncturing is applied after inter frame interleaving. This same algorithm can also be used for repetitions with fairly good results. However, the objectives to obtain optimal puncturing patterns and optimal repetition patterns are slightly different. By fully adapting the pattern to the requirements of repetition a performance improvement compared with the patterns presented in the above mentioned contribution R1-99641 can be realised.

In the above mentioned contribution R1-99641, the following modification for the rate matching was introduced: Puncturing with simple shifting rule before column randomizing of interframe interleaver (e.g. FS-MIL) (To easily understand the main characteristic of the processing block, the name of "row-by-row processing" is renamed "column randomizing".)

It is not necessary to perform the above rate matching before column randomizing, actually. The equivalent rate matching could be done after column randomizing with taking the column randomizing rule into account and this could be easily achieved only replacing the initial offset value of puncturing with a simple formula. The exact modified rate-matching algorithm is shown in List 1. In this list, $e_{offset}$ is introduced to set initial offset of each frame for uplink rate matching. Furthermore, $e_{offset}$ is not only applied for puncturing but also repetition. This could also place repetition bits more uniformly.

The interleaving in the transport multiplexing scheme is performed in two steps. This has some implications.

One embodiment of the present invention will now be described, by way of example only, with reference to the accompanying drawings wherein;

Fig. 1       *1:4 repetition with algorithm in present* invention

Fig. 2       is a schematic block diagram of a mobile radio communication system;

Fig. 3       is a schematic block diagram of a data communications apparatus forming a link between the mobile station and a base station of the communications network shown in Fig. 2;

Fig. 4       is a multiplexing scheme of a transport channel.

Fig. 5       *1st interleaving of 80 ms and 1:8 puncturing with improved algorithm*

Fig. 6       *Principle of optimised puncturing*

Fig. 7       Lookup table

Fig. 8       *1st interleaving of 80 ms and 1:5 puncturing*

Fig. 9       *1:8 puncturing with algorithm in* R1-99641

Fig. 10      *1:4 puncturing with algorithm in* R1-99641

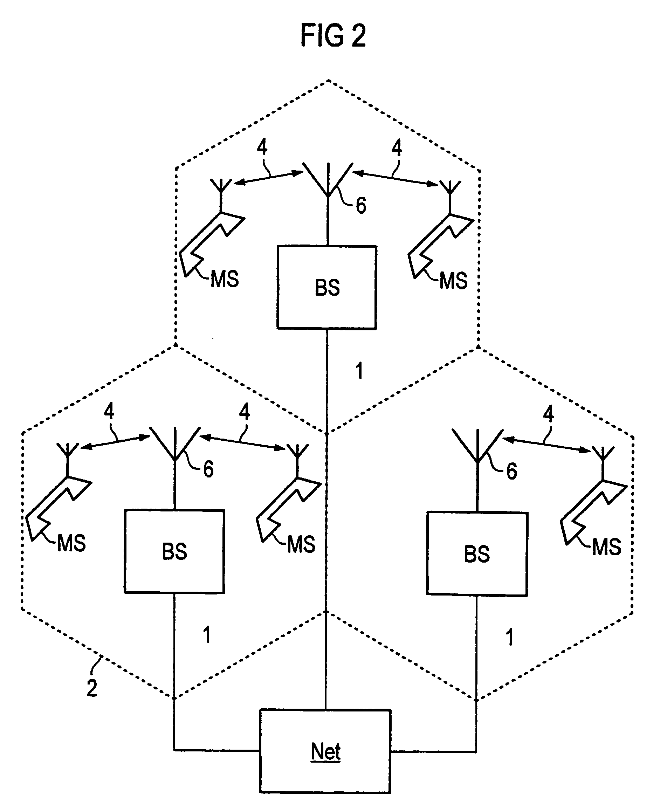

An example embodiment of the present invention will be described with reference to a mobile radio communications system. Mobile radio communications systems are provided with multiple access systems which operate, for example, in accordance with Time Division Multiple Access (TDMA) such as that used in the Global System for Mobiles, which is a mobile radio telephone standard administered by the European Telecommunications Standards Institute. The mobile radio communications system, alternatively, could be provided with a multiple access system which operates in accordance with Code Division Multiple Access (CDMA) such as that proposed for the third generation Universal Mobile Telecommunication System. However, as will be appreciated, any data communications system could be used to illustrate an example embodiment of the present invention, such as a Local Area Network, or a Broadband Telecommunications Network operating in accordance with Asynchronous Transfer Mode. These illustrative example data communications systems are characterised in particular in that data is transmitted as bursts, packets or blocks. In the case of a mobile radio communications system, the data is transported in bursts of data bearing radio signals, which represent a pre-determined data size. An example of such a mobile radio communication system is shown in Fig. 2.

In Fig. 2, three base stations BS, are shown to communicate radio signals with mobile stations MS, within a radio coverage area formed by cells 1 defined by broken lines 2. The base stations BS, are coupled together using a network inter-working unit NET. The mobile stations MS, and the base stations BS communicate data by transmitting radio signals designated 4, between antennas 6, coupled to the mobile stations MS and the base stations BS. The data is communicated between the mobile stations MS and the base stations BS using a data communications apparatus in which the data is transformed into the radio signals 4, which are communicated to the receive antenna 6, which detects the radio signals. The data is recovered by the receiver from the radio signals.

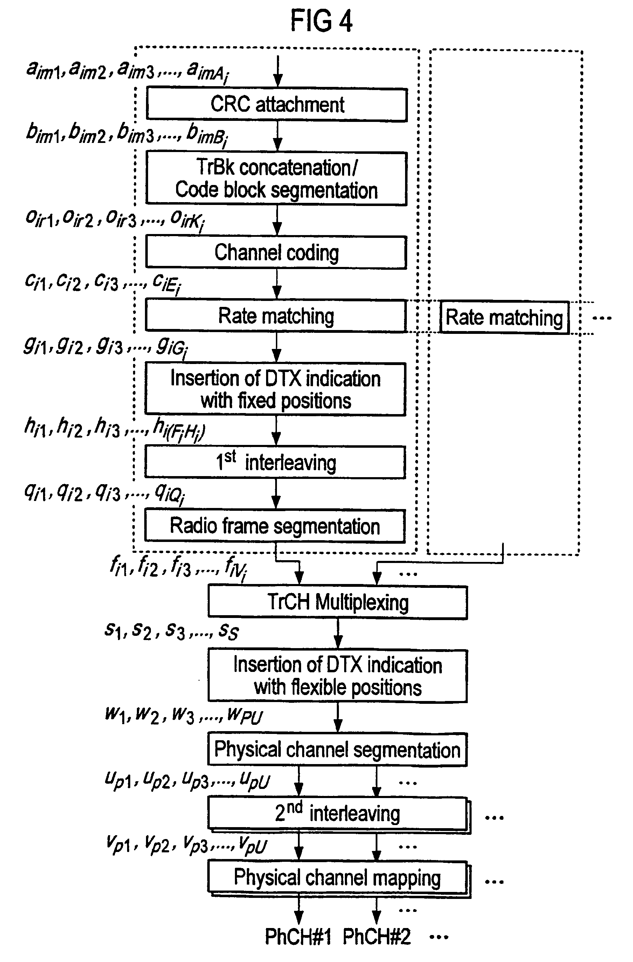

An illustrative example of a data communications apparatus forming a radio communications link between one of the mobile stations MS, and one of the base stations BS, is shown in Fig. 3, where parts also appearing in Fig. 2bear identical numerical designations. In Fig. 3 a source of data 10, generates data frames 8, at a rate determined by a type of data which the source is generating. The data frames 8, generated by the source 10, are fed to a rate converter 12, which operates to convert the data frames 8, into transport data blocks 14. The transport data blocks 14, are arranged to be substantially equal in size, to a pre-determined size of an amount of data which can be carried by bursts of data bearing radio signals via which data is communicated by a radio interface formed by a transmitter 18, and receiver 22, pair.

The data transport block 14 is fed to a radio access processor 16, which operates to schedule transmission of the transport data block 14, over the radio access interface. At an appropriate time the transport data block 14, is fed by the radio access processor 16, to a transmitter 18 which operates to convert the transport data block into the burst of data bearing radio signals which are transmitted in a time period allocated for the transmitter to effect communication of the radio signals. At the receiver 22, an antenna 6" of the receiver detects the radio signals and down converts and recovers the data frame which is fed to a radio access de-scheduler 24. The radio access de-scheduler 24, feeds the received data transport block to a rate de-converter 26, under control of the multiple access de-scheduler 24, effected via a conductor 28. The rate de-converter 26, thereafter feeds a representation of the regenerated data frame 8, to a destination or sink for the data frame 8 which is represented by the block 30.

The rate converter 12, and rate de-converter 26, are arranged to make, as far as possible, optimum use of the data bearing capacity available within the transport data block 14. This is effected in accordance with the illustrative embodiment of the present invention by the rate matching converter 12, which operates to encoded the data frame, and then puncture or repeat data bits or symbols selected from the encoded data frame, to the effect of generating a transport data block, which fits with the size of the data blocks 14. The rate converter 12, has an encoder, and a puncturer/repeater. The data frame 8, fed to the encoder, is encoded to generate an encoded data frame, which is fed to the puncturer/repeater. The encoded data frame is then punctured/repeated by the puncturer/repeater, to generate the data transport block 14.

Puncturing / Repetition is implemented by shifting the puncturing pattern in each frame. This is equivalent to applying the puncturing before the column shuffling, even if it is actually performed after inter frame interleaving.

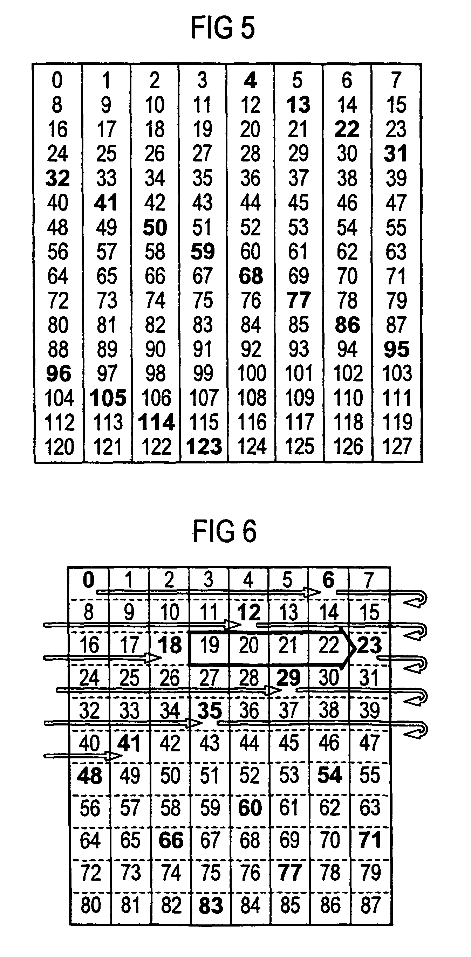

The goal of a good repetition algorithm is to spread repeated bits evenly as possible. The same is true for a good puncturing algorithm. The algorithm presented in the above mentioned contribution R1-99641 works as follows (we will not always write puncturing/repetition but only use wone expression for simplicity): This can best be obtained by repeating every $n^{th}$ bit (for non integer repetition rates sometimes every $n^{th}$ and sometimes every $n+1^{st}$ bit). We can try to apply this principle also for repetition after interleaving, but there is one constraint: We have to distribute repeated bits on all frames evenly. For example, assume 80 ms interleaving and a repeating rate of 1:6. By repeating every $6^{th}$ bit we would only repeat column 0,2,4,6 but not 1,3,5,7 which is of course impossible. To balance repetition between columns, we have to change the repeating interval sometimes (here once) to avoid hitting always the same columns. This is shown in Fig. 6. Bold horizontal arrows show repetition distance of 6 and the thick hollow arrow shows a different repetition distance of 5 to avoid hitting the first column twice. After having repeated in every column once, the pattern can be shifted down by 6 rows to determine the next bits to be repeated. Obviously this is equivalent to repeating every $6^{th}$ bit in each column and shifting puncturing patterns in different columns relative to each other.

We now repeat the formulas for the optimised algorithm of the mentioned contribution R1-99641, as it is most effective for puncturing, we focus on the case of puncturing: Denote the number of bits in one frame before rate matching by $N_c$, the number of bits after rate matching by $N_i$, the index to the punctured/repeated bit by $m_j$, the frame number by k, and the number of interleaved frames by F. We mainly consider the case when $N_c > N_i$, i.e. puncturing, but the formulars will be applicable for repetition as well. In the example above $N_c=20$, $N_i=16$, $m_1=4$, $m_2=9$, $m_3=14$, $m_4=19$, k=1...7, and F=8. Shifting could then be achieved with the following formula:

-- calculate average puncturing distance

$q := (\lfloor N_c / (|N_i-N_c|) \rfloor) \mod F$      -- where $\lfloor \rfloor$ means round *downwards and ||means absolute value* .

$Q := (\lfloor N_c/(|N_i-N_c|) \rfloor) \ div \ F$

if q is even -- *handle special case:*

     then q = q -gcd(q, F)/F -- where gcd (q, F) means greatest common divisor of q and F

       -- note gcd can be easily computed using bit manipulations, because F is a power of 2.

       -- for the same reason calculations with q can be easily done using binary fixed point

       -- arithmetic (or integer arithmetic and a few shift operations).

endif

- calculate S and T, S represents the shift of the row mod F and T the shifting amount div F

for *i = 0* to *F-1*

     $S (R_F (\lceil i*q \rceil \mod F)) = (\lceil i*q \rceil \ div F)$ -- *where $\lceil \rceil$ means round upwards.*

     $T((R_F (\lceil i*q \rceil \mod F)) = i$      -- $R_F (k)$ *reverts the interleaver as in [7]*

end for

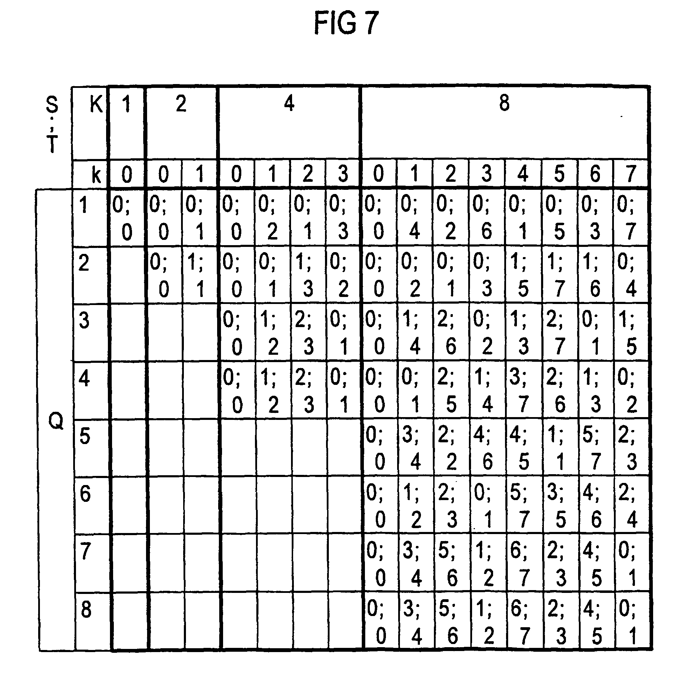

In a real implementation, these formulas can be implemented as a lookup table as shown in Fig. 7. The table also includes the effect of re mapping the column randomising achieved by $R_F$ (k). Obviously S can also be calculated from T as jet an other implementation option.

Then, $e_{offset}$ can be calculated as

$$e_{offset} (k) = ((2^*S) + 2^*T^* Q +1)^* y + 1) \bmod 2Nc$$

$e_{offset}$ (k) (sometimes also called $e_{init}$) is then used to pre load e in the rate matching formula which is described in TS25.212, section 4.2.7.4 "Rate matching pattern determination" for a puncturing/repetition algorithm based on error control, this algorithm is cited hereunder:

```
------------------------

Denote the bits before rate matching by:
x_{i1}, x_{i2}, x_{i3}, ..., x_{iN} , where i is the TrCH number and N is the  para-
meter given in section 4.2.7.2
.

The rate matching rule is as follows:

if puncturing is to be performed

        e = eini  -- initial error between current and desired

         puncturing ratio

        m = 1                -- index of current bit

          do while m <= N

                e = e - e_{minus}                 -- update error

                if e <= 0 then             -- check if bit num-

                ber m should be punctured

                    puncture bit x_{i,m}

                    e = e + e_{plus}   -- update error

                end if

                m = m + 1                      --  next bit

          end do

            else
```

```
e = e_ini                    -- initial error between
current and desired puncturing ratio

m = 1                    -- index of current bit

do while m <= N

    e = e - e_minus              -- update error

    do while e <= 0        -- check if bit number m
    should be repeated

        repeat bit x_i,m

        e = e +  e_plus -- update error

    end do

    m = m + 1                    --  next bit

end do

end if


A repeated bit is placed directly after the original one.


----------------------
```

The same algorithm can be formulated in a different way with identical result:

q:= ($\lfloor$ $N_c$/ ($|N_i-N_c|$)$\rfloor$) -- where $\lfloor$ $\rfloor$ means round downwards and || means absolute value.

-- avoid hitting the same column twice:

if q is even
    then q = q - gcd(q, F)/F -- where gcd (q, F) means greatest common divisor of q and F
    -- note gcd can be easily computed using bit manipulations, because F is a power of 2.
    -- for the same reason calculations with q can be easily done using binary fixed point
    -- arithmetic (or integer arithmetic and a few shift operations). endif

- calculate S , S represents the shift of the row for i = 0 to F-1
    $S(R_F$ ($\lceil$ i*q$\rceil$ mod F)) = ($\lceil$ i*q$\rceil$ div F) -- where $\lceil$ $\rceil$ means round upwards.
        -- $R_F(k)$ reverts the interleaver end for

Then $e_{offset}$ can be calculated as

$$e_{offset}(k) = ((2*S )* |N_i-N_c| + 1) \bmod 2Nc$$

As will be appreciated by those skilled in the art, the constant 1 in the definition of $e_{offset}$ can also be replaced with any other constant which is identical for all columns. For reasons of simplicity, this will not be explicitly mentioned in the following text. It will also be possible to modify and/or extend the algorithm in various ways while still keeping the same objective.

This algorithm will obtain the perfect puncturing as if puncturing using the rate matching algorithm was applied directly before interleaving, if the puncturing rate is an odd fraction i.e. 1:5 or 1:9. For other cases, adjacent bits will never be punctured, but one distance between punctured bits may be larger by up to lcd(q,F)+1 than the other ones. Note that this algorithm can also be applied to bit repetition as well. While repeating adjacent bits is not as bad as puncturing them, it is still advantageous to distribute repeated bits as evenly as possible.

The basic intention of these formulas is to try to achieve equidistant spacing of the punctured bits in the original order, but taking into account the constraint, that the bits have to be punctured equally in different frames. This may make it necessary to reduce the puncturing distance by 1 sometimes. The presented algorithm is optimum in the sense, that it will never reduce the distance by more than 1, and will reduce it only as often as necessary. This gives the best possible puncturing pattern under the above mentioned constraints.

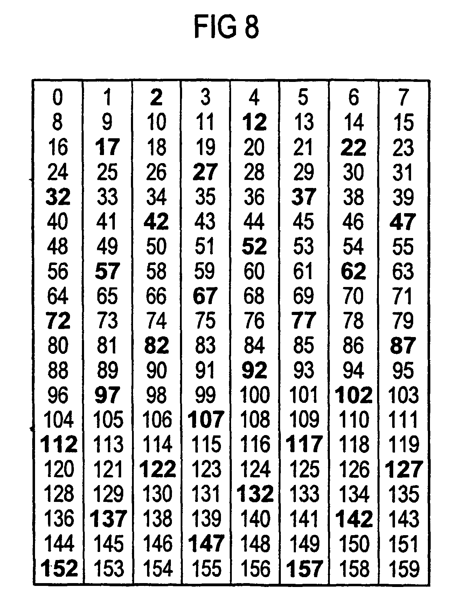

The following is an example using the first set of parameters i.e. puncturing by 1:5 (Fig. 8). Obviously the optimised algorithm not only completely avoids puncturing adjacent bits, it also distributes punctured bits with equal spacing in the original sequence. In fact the same properties are achieved, as if the puncturing had been done directly after coding before interleaving.

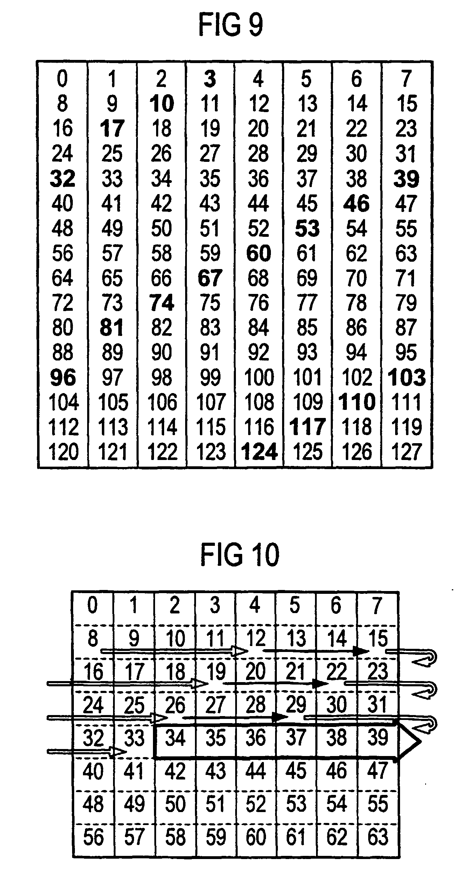

Let us now investigate the next case i.e. puncturing by 1:8 (Fig. 9). Again puncturing of adjacent bits is avoided. In this case it is not possible to obtain an equidistant puncturing because then all bits of one single frame would be punctured, which is totally unacceptable. In this case most of the distances between adjacent bits are 7 (only one less than would be the case with an optimum distribution). Some distances are larger (every eighth) in exchange.

We now introduce the changes which are applied to improve the algorithm for the case of puncturing. The algorithm as described above is apparently optimum to get an even distribution. Surprisingly it is possible to improve it. This is based on the hypothesis, that some differences between puncturing and repetition can be exploited: For puncturing it is most disadvantageous to puncture adjacent bits. More general it should be avoided that there are incidents where punctured pits are considerably closer together than the average puncturing distance. The reason is that a close puncturing will weaken the error correction code in this area which will cause a local BER increase which spoils the performance. Repeating adjacent bits is not extremely harmful. More general, two repetitions which are much closer to each other than the average repetition distance will not seriously affect the performance. However, if locally the distance between repeated bits is increased considerably then the affected areas do not enjoy an improved decoding probability.

This is equivalent to a local BER increase like mentioned above. Surprisingly it is better to accept a slightly increased distance between adjacent repeated bits more often than sometimes a more considerably increased distance. This is achieved by the following modification of the algorithm to obtain the shifting amount between columns:

- When the average puncturing distance q is calculated, the rounding is performed to the next higher integer, not the next lower integer.
- If q is even, it is not reduced but increased.

The formula, derived from the second (simplified) representation will then be as follows (the same changes can obviously also be done to the first representation or to any other representation that gets to the same objective):

$q := (\lceil N_c / (|N_i - N_c|) \rceil)$ -- where $\lceil \ \rceil$ means round upwards and $||$ means absolute value.

-- *avoid hitting the same column twice:*

if q is even

      then q = q + gcd(q, F)/F -- where gcd (q, F) means greatest common divisor of q and F

      -- note gcd can be easily computed using bit manipulations, because F is a power of 2.

      -- for the same reason calculations with q can be easily be done using binary fixed point

      -- arithmetic (or integer arithmetic and a few shift operations).

endif

- calculate S , S represents the shift of the row for *i = 0* to *F-1*

      $S (RF (\lfloor i*q \rfloor \mod F)) = (\lceil i*q \rceil \ \mathrm{div} \ F)$      -- *where $\lfloor \ \rfloor$ means round downwards.*

      -- *$R_F(k)$ reverts the first interleaver*

end for

Then $e_{offset}$ can be calculated as

$$e_{offset} (k) = ((2*S(k) * |N_i - N_c| + 1) \ \mathrm{mod} \ 2Nc$$

The puncturing patterns of the individual columns are shiftet relative to each other by the amount of S(k). When an error control algorithm is utilised, this is achieved by preloading the initial error value as shown above. Of course, other means are possible as well.

There is a further difference between puncturing and repetition. Puncturing can not possibly exeed 100% (every bit is punctured) and in reality the performance will be so seriously degraded when puncturing more than some 20% (maybe 50% for some special encoders), so that the range of puncturing will be restricted in real applications. For repetition however, such hard limits do not exist. It is perfectly viable to repeat 100% of the bits (i.e. doubling every bit) but also higher repetition rates are viable, every bit can be repeated several times. The more repetition is performed the better the decoding probability will be.

A repetition rate of 80% (i.e. 80% of the bits are repeated and 20% are transmitted unrepeated) can also be interpreted as a repeating every bit, but then puncturing 20% of the repeated bits (here 20% refers to the number of the original bits). Basically, 20% of the bits are transmitted with weaker reliability. This is similar, but not so extreme as the case where 20% of the bits are punctured (the only difference is the degree of reliability, which is about half as good for the bits not repeated but is totally unknown for punctured bits).

Therefore any puncturing pattern which is optimum for 20% puncturing will also be optimum for 80% repetition, when the following substitution is performed:

| 20 % puncturing | 80% repetition |
| --- | --- |
| Punctured Bit | Not Repeated bit |
| Non punctured Bit | Repeated bit |

Note that a puncturing/repetition algorithm as cited above and described in TS25.212 will already generate the same pattern for the two cases (possibly shifted relative to each other by a constant offset). However, when applied after inter frame interleaving the algorithm has to be extended as presented in the above mentioned contribution R1-99641; (optimum shifting patterns for puncturing) or as described above (optimum shifting patterns for repetition).

The repetition or puncturing rate can be expressed as

$$r = (N_i - N_c) / N_c$$

Where $N_c$ is the number of bits before rate matching and $N_i$ is the number of bits after rate matching. We define the equivalent rate for repetition (i.e. $N_i > N_c$ )as

$$re = ( (N_i - N_c/2) \bmod N_c - N_c/2) / N_c$$

So a puncturing rate of 20% is equivalent, as far as the optimum column shifting is concerned, with a repetition rate of 80%, 180%, 280% and so on. A repetition rate of 30% is equivalent to a repetition rate of 130%, 230%, 330% and so on.

The relative shift of the puncturing pattern can then be calculated based on this effective repetition rate rather than the real rate. Depending on whether re is larger or smaller than 0, the formula for repetition or puncturing will have to be applied.

The value q is the inverse of re and can be calculated as:

$$q = N_c / ( (N_i - N_c/2) \bmod N_c - N_c/2).$$

There are several options how to evaluate $N_c/2$ for odd $N_c$: rounding up or down or not at all. The sign of q then carries the information, whether puncturing or repetition is to be performed, so before of applying the formula, the absolute value may have to be computed.

Summarising the above, the formula to calculate the column shifting pattern can be formulated as follows. The formulation below has the added advantage, that no distinction has to be done for puncturing or repetition, all cases are dealt with this formula. Of course there are many different ways to express the same basic properties in formulas as will be appreciated by those skilled in the art.

$q := \lceil N_c / ( (N_i - N_c/2) \bmod N_c - N_c/2) \rceil$ -- where $\lceil \ \rceil$ means round upwards to the next integer. Note that $\lceil 1.5 \rceil = 2$ and $\lceil -1.5 \rceil = 1$ in this nomenclature.

if q is even -- *avoid hitting the same column twice:*

    then q' = q + gcd(|q|, F)/F -- where gcd (q, F) means greatest common divisor of q and F

    -- note that q' is now not an integer, but a multiple of 1/8

-- here ||means absolute value

else

    q' = q

endif

- calculate S(k), representing the shift of the puncturing pattern for the radio frame k. S(k) is used when preloading *e* in the rate matching formula in the cited rate matching algorithm of TS25.212.

for *i = 0 to F-1*

$$S(R_F (\lfloor i*q' \rfloor \mod F)) = (\lfloor i*q' \rfloor \div F)$$

-- where $\lfloor \ \rfloor$ means round upwards.

end for

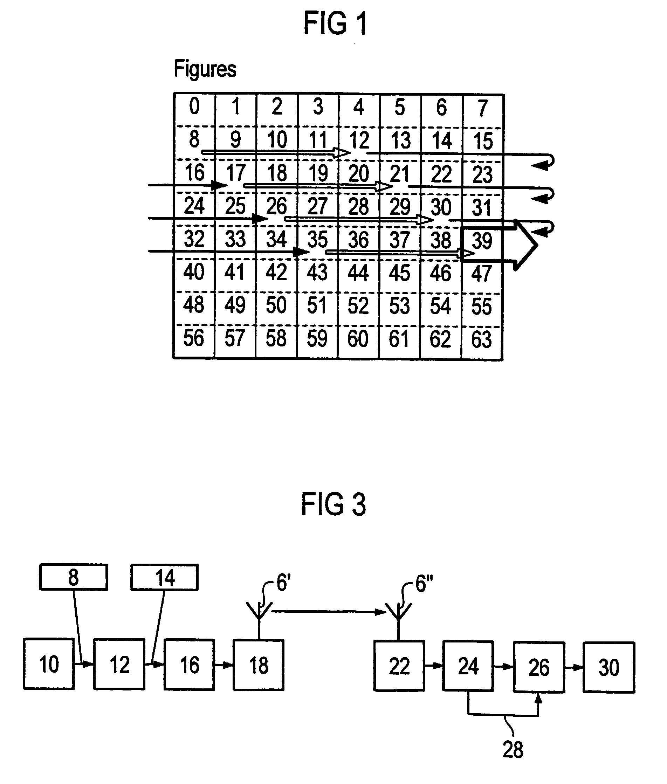

Fig. 1 shows the result of the proposed repetition scheme for a repetition rate of 1:4. Bold figures indicate repeated bits. Bold arrows indicate a distance between adjacent repeated bits of 4, thin arrows indicate 5 and the hollow arrow indicates 1.

In comparison Fig. 10 shows the same case for the puncturing pattern from the previous contribution R1-99641. Bold figures indicate repeated bits. Bold arrows indicate a distance between adjacent repeated bits of 4, thin arrows indicate 3 and the hollow arrow indicates 7.

As can be seen by comparing the figures, the repetition scheme presented here avoids a larger distance between repeated bits (7 in fig. 10) at the expense of having more often a slightly reduced distance of 3, where the previous algorithm would select a distance of 5 instead. Because the occurrences of large distances will cause performance degradations, the selection of the presented algorithm is beneficial.

Thus near optimum repetition patterns are possible when applying rate matching after first interleaving. The necessary algorithm is not very complex, it is similar to the puncturing algorithm itself but has to be executed once per frame only, not once per bit.

## Claims

1. Method of communicating data frames, whereby the transmitted elements are distributed on one or several frames by using an interleaver and where elements are repeated wherein the puncturing or repetition is done in a way that the pattern, when related to the original ordering of the elements before interleaving avoids that adjacent repeated bits are separated considerably more than the average repetition distance.

2. Method of communicating data frames, whereby the transmitted elements are distributed on one or several frames by using an interleaver and where elements are repeated wherein the repetition is done in a way that the pattern, when related to the original ordering of the elements before interleaving will be equidistant or roughly equidistant.

3. Method of communicating data frames, whereby the transmitted elements are distributed on one or several frames by using an interleaver and where elements are repeated wherein the repetition pattern occurring within the frames is shifted relative to the first frame in a way that the resulting repetition pattern, when related to the original ordering of the elements before interleaving will be equidistant or roughly equidistant.

4. Method of communicating data frames, as claimed in any of the preceding claims, whereby the repetition rate is an integer fraction (1/q) whereby q and the number of frames F do not have a common divisor, whereby the patterns occurring within the frames is shifted relative to the first frame in a way that the resulting repetition pattern, when related to the original ordering of the elements before interleaving is equidistant.

5. Method of communicating data frames, as claimed in any of the preceding claims, whereby the repetition rate is NOT an integer fraction (1/q) or q and the number of frames F DO have a common divisor, whereby the patterns occurring within the frames is shifted relative to the first frame by applying the relative shifts that would be used for the next lower puncturing rate which fulfils the precondition of the preceding claim.

6. Method of communicating data frames, as claimed in any of the preceding claims, whereby the puncturing/repetition rate is NOT an integer fraction (1/p) or p and the number of frames F DO have a common divisor, whereby the patterns occurring within the frames is shifted relative to the first frame by applying the relative shifts that would be used for q' where q' is calculated from q by rounding q up to the smallest integer which is not smaller than q (here called q") and adding the greatest common divisor of F and q" divided by F, in case q" and F do have a common divisor.

7. Method of communicating data frames, as claimed in 3. whereby the shift of the pattern is the same as for a corresponding puncturing rate which is equal to a multiple of 100% minus the repetition rate and is within the range of 0% (including) to 100% (excluding).

8. Method of communicating data frames, as claimed in 7. whereby the shift of the pattern is the same as for the corresponding puncturing rate, if the corresponding puncturing rate fulfils predetermined conditions, and the shifting pattern is as claimed in any of the claims 4 to 1 otherwise.

9.  Method of communicating data frames, as claimed in the preceding claim, where said condition is that the corresponding puncturing rate is between 0% and 50% (including 50%)

10. Method of communicating data frames, as claimed in 9, where said condition is that the corresponding puncturing rate is between 0% and 50% (excluding 50%)

11. Method of communicating data frames, as claimed in any of the preceding claims, whereby the elements are binary digits

12. Method of communicating data frames, as claimed in any of the preceding claims, whereby the frames have a duration of 10 ms and interleaving is done over a power of two of frames

13. Method of communicating data frames, as claimed in any of the preceding claims, whereby the frames are transmitted using a CDMA transmission system

14. Data communications apparatus which operates to communicate data frames, said apparatus comprising means for communicating data frames as claimed in any of the preceding claims.

# FIG 1

Figures

| 0 | 1 | 2 | 3 | 4 | 5 | 6 | 7 |
|---|---|---|---|---|---|---|---|
| 8 | 9 | 10 | 11 | 12 | 13 | 14 | 15 |
| 16 | 17 | 18 | 19 | 20 | 21 | 22 | 23 |
| 24 | 25 | 26 | 27 | 28 | 29 | 30 | 31 |
| 32 | 33 | 34 | 35 | 36 | 37 | 38 | 39 |
| 40 | 41 | 42 | 43 | 44 | 45 | 46 | 47 |
| 48 | 49 | 50 | 51 | 52 | 53 | 54 | 55 |
| 56 | 57 | 58 | 59 | 60 | 61 | 62 | 63 |

# FIG 3

# FIG 2

# FIG 4

$a_{im1}, a_{im2}, a_{im3}, ...., a_{imA_i}$

| CRC attachment |

$b_{im1}, b_{im2}, b_{im3}, ...., b_{imB_i}$

| TrBk concatenation/<br>Code block segmentation |

$o_{ir1}, o_{ir2}, o_{ir3}, ...., o_{irK_i}$

| Channel coding |

$c_{i1}, c_{i2}, c_{i3}, ...., c_{iE_i}$

| Rate matching |      | Rate matching | $\cdots$

$g_{i1}, g_{i2}, g_{i3}, ...., g_{iG_i}$

| Insertion of DTX indication<br>with fixed positions |

$h_{i1}, h_{i2}, h_{i3}, ...., h_{i(F_iH_i)}$

| 1st interleaving |

$q_{i1}, q_{i2}, q_{i3}, ...., q_{iQ_i}$

| Radio frame segmentation |

$f_{i1}, f_{i2}, f_{i3}, ...., f_{iV_i}$     $\cdots$

| TrCH Multiplexing |

$s_1, s_2, s_3, ...., s_S$

| Insertion of DTX indication<br>with flexible positions |

$w_1, w_2, w_3, ...., w_{PU}$

| Physical channel segmentation |

$u_{p1}, u_{p2}, u_{p3}, ...., u_{pU}$     $\cdots$

| 2nd interleaving |     $\cdots$

$v_{p1}, v_{p2}, v_{p3}, ...., v_{pU}$     $\cdots$

| Physical channel mapping |     $\cdots$

$\cdots$

PhCH#1   PhCH#2   $\cdots$

## FIG 5

| 0 | 1 | 2 | 3 | **4** | 5 | 6 | 7 |
|---|---|---|---|---|---|---|---|
| 8 | 9 | 10 | 11 | 12 | **13** | 14 | 15 |
| 16 | 17 | 18 | 19 | 20 | 21 | **22** | 23 |
| 24 | 25 | 26 | 27 | 28 | 29 | 30 | **31** |
| **32** | 33 | 34 | 35 | 36 | 37 | 38 | 39 |
| 40 | **41** | 42 | 43 | 44 | 45 | 46 | 47 |
| 48 | 49 | **50** | 51 | 52 | 53 | 54 | 55 |
| 56 | 57 | 58 | **59** | 60 | 61 | 62 | 63 |
| 64 | 65 | 66 | 67 | **68** | 69 | 70 | 71 |
| 72 | 73 | 74 | 75 | 76 | **77** | 78 | 79 |
| 80 | 81 | 82 | 83 | 84 | 85 | **86** | 87 |
| 88 | 89 | 90 | 91 | 92 | 93 | 94 | **95** |
| **96** | 97 | 98 | 99 | 100 | 101 | 102 | 103 |
| 104 | **105** | 106 | 107 | 108 | 109 | 110 | 111 |
| 112 | 113 | **114** | 115 | 116 | 117 | 118 | 119 |
| 120 | 121 | 122 | **123** | 124 | 125 | 126 | 127 |

## FIG 6

| **0** | 1 | 2 | 3 | 4 | 5 | **6** | 7 |
|---|---|---|---|---|---|---|---|
| 8 | 9 | 10 | 11 | **12** | 13 | 14 | 15 |
| 16 | 17 | **18** | 19 | 20 | 21 | 22 | **23** |
| 24 | 25 | 26 | 27 | 28 | **29** | 30 | 31 |
| 32 | 33 | 34 | **35** | 36 | 37 | 38 | 39 |
| 40 | **41** | 42 | 43 | 44 | 45 | 46 | 47 |
| **48** | 49 | 50 | 51 | 52 | 53 | **54** | 55 |
| 56 | 57 | 58 | 59 | **60** | 61 | 62 | 63 |
| 64 | 65 | **66** | 67 | 68 | 69 | 70 | **71** |
| 72 | 73 | 74 | 75 | 76 | **77** | 78 | 79 |
| 80 | 81 | 82 | **83** | 84 | 85 | 86 | 87 |

# FIG 7

| S.T / Q | K=1 | K=2 | | K=4 | | | | K=8 | | | | | | | |
|---|---|---|---|---|---|---|---|---|---|---|---|---|---|---|---|
| k | 0 | 0 | 1 | 0 | 1 | 2 | 3 | 0 | 1 | 2 | 3 | 4 | 5 | 6 | 7 |
| 1 | 0; 0 | 0; 0 | 0; 1 | 0; 0 | 0; 2 | 0; 1 | 0; 3 | 0; 0 | 0; 4 | 0; 2 | 0; 6 | 0; 1 | 0; 5 | 0; 3 | 0; 7 |
| 2 | | 0; 0 | 1; 1 | 0; 0 | 0; 1 | 1; 3 | 0; 2 | 0; 0 | 0; 2 | 0; 1 | 0; 3 | 1; 5 | 1; 7 | 1; 6 | 0; 4 |
| 3 | | | | 0; 0 | 1; 2 | 2; 3 | 0; 1 | 0; 0 | 1; 4 | 2; 6 | 0; 2 | 1; 3 | 2; 7 | 0; 1 | 1; 5 |
| 4 | | | | 0; 0 | 1; 2 | 2; 3 | 0; 1 | 0; 0 | 0; 1 | 2; 5 | 1; 4 | 3; 7 | 2; 6 | 1; 3 | 0; 2 |
| 5 | | | | | | | | 0; 0 | 3; 4 | 2; 2 | 4; 6 | 4; 5 | 1; 1 | 5; 7 | 2; 3 |
| 6 | | | | | | | | 0; 0 | 1; 2 | 2; 3 | 0; 1 | 5; 7 | 3; 5 | 4; 6 | 2; 4 |
| 7 | | | | | | | | 0; 0 | 3; 4 | 5; 6 | 1; 2 | 6; 7 | 2; 3 | 4; 5 | 0; 1 |
| 8 | | | | | | | | 0; 0 | 3; 4 | 5; 6 | 1; 2 | 6; 7 | 2; 3 | 4; 5 | 0; 1 |

# FIG 8

| 0 | 1 | **2** | 3 | 4 | 5 | 6 | 7 |
|---|---|---|---|---|---|---|---|
| 8 | 9 | 10 | 11 | **12** | 13 | 14 | 15 |
| 16 | **17** | 18 | 19 | 20 | 21 | **22** | 23 |
| 24 | 25 | 26 | **27** | 28 | 29 | 30 | 31 |
| **32** | 33 | 34 | 35 | 36 | **37** | 38 | 39 |
| 40 | 41 | **42** | 43 | 44 | 45 | 46 | **47** |
| 48 | 49 | 50 | 51 | **52** | 53 | 54 | 55 |
| 56 | **57** | 58 | 59 | 60 | 61 | **62** | 63 |
| 64 | 65 | 66 | **67** | 68 | 69 | 70 | 71 |
| **72** | 73 | 74 | 75 | 76 | **77** | 78 | 79 |
| 80 | 81 | **82** | 83 | 84 | 85 | 86 | **87** |
| 88 | 89 | 90 | 91 | **92** | 93 | 94 | 95 |
| 96 | **97** | 98 | 99 | 100 | 101 | **102** | 103 |
| 104 | 105 | 106 | **107** | 108 | 109 | 110 | 111 |
| **112** | 113 | 114 | 115 | 116 | **117** | 118 | 119 |
| 120 | 121 | **122** | 123 | 124 | 125 | 126 | **127** |
| 128 | 129 | 130 | 131 | **132** | 133 | 134 | 135 |
| 136 | **137** | 138 | 139 | 140 | 141 | **142** | 143 |
| 144 | 145 | 146 | **147** | 148 | 149 | 150 | 151 |
| **152** | 153 | 154 | 155 | 156 | **157** | 158 | 159 |

## FIG 9

| 0 | 1 | 2 | **3** | 4 | 5 | 6 | 7 |
|---|---|---|---|---|---|---|---|
| 8 | 9 | **10** | 11 | 12 | 13 | 14 | 15 |
| 16 | **17** | 18 | 19 | 20 | 21 | 22 | 23 |
| 24 | 25 | 26 | 27 | 28 | 29 | 30 | 31 |
| **32** | 33 | 34 | 35 | 36 | 37 | 38 | **39** |
| 40 | 41 | 42 | 43 | 44 | 45 | **46** | 47 |
| 48 | 49 | 50 | 51 | 52 | **53** | 54 | 55 |
| 56 | 57 | 58 | 59 | **60** | 61 | 62 | 63 |
| 64 | 65 | 66 | **67** | 68 | 69 | 70 | 71 |
| 72 | 73 | **74** | 75 | 76 | 77 | 78 | 79 |
| 80 | **81** | 82 | 83 | 84 | 85 | 86 | 87 |
| 88 | 89 | 90 | 91 | 92 | 93 | 94 | 95 |
| **96** | 97 | 98 | 99 | 100 | 101 | 102 | **103** |
| 104 | 105 | 106 | 107 | 108 | 109 | **110** | 111 |
| 112 | 113 | 114 | 115 | 116 | **117** | 118 | 119 |
| 120 | 121 | 122 | 123 | **124** | 125 | 126 | 127 |

## FIG 10

| 0 | 1 | 2 | 3 | 4 | 5 | 6 | 7 |
|---|---|---|---|---|---|---|---|
| 8 | 9 | 10 | 11 | 12 | 13 | 14 | 15 |
| 16 | 17 | 18 | 19 | 20 | 21 | 22 | 23 |
| 24 | 25 | 26 | 27 | 28 | 29 | 30 | 31 |
| 32 | 33 | 34 | 35 | 36 | 37 | 38 | 39 |
| 40 | 41 | 42 | 43 | 44 | 45 | 46 | 47 |
| 48 | 49 | 50 | 51 | 52 | 53 | 54 | 55 |
| 56 | 57 | 58 | 59 | 60 | 61 | 62 | 63 |

EP 1 091 517 A1

| | European Patent Office | **EUROPEAN SEARCH REPORT** | Application Number<br>EP 99 11 9188 |
|---|---|---|---|

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br><br><br><br>A<br><br>A | EP 0 912 009 A (NOKIA MOBILE PHONES LTD)<br>28 April 1999 (1999-04-28)<br>* column 2, line 1 - line 11 *<br>* column 5, line 29 - line 33 *<br>* column 6, line 41 - column 8, line 39 *<br>* column 9, line 50 - line 53 *<br>---<br>WO 97 16899 A (NOKIA TELECOMMUNICATIONS OY<br>;PIRHONEN RIKU (FI); RANTA PEKKA (FI);)<br>9 May 1997 (1997-05-09)<br>* page 8, line 3 - line 8 *<br>* figure 8 *<br>----- | 1-3,<br>11-14<br><br><br><br>4-10<br><br>1-3,14 | H04L1/00<br>H04L1/08<br><br><br><br><br><br><br><br><br>TECHNICAL FIELDS<br>SEARCHED (Int.Cl.7)<br><br>H04L |

| | | |
|---|---|---|
| The present search report has been drawn up for all claims | | |
| Place of search<br>THE HAGUE | Date of completion of the search<br>14 March 2000 | Examiner<br>Ghigliotti, L |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

\& : member of the same patent family, corresponding
    document

EPO FORM 1503 03.82 (P04C01)

18

## ANNEX TO THE EUROPEAN SEARCH REPORT
## ON EUROPEAN PATENT APPLICATION NO.

EP 99 11 9188

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2000

| Patent document cited in search report | | Publication date | Patent family member(s) | | Publication date |
|---|---|---|---|---|---|
| EP 0912009 | A | 28-04-1999 | FI | 974052 A | 25-04-1999 |
| | | | BR | 9804020 A | 21-12-1999 |
| | | | CN | 1226110 A | 18-08-1999 |
| | | | JP | 11239194 A | 31-08-1999 |
| WO 9716899 | A | 09-05-1997 | FI | 955206 A | 01-05-1997 |
| | | | AU | 7300396 A | 22-05-1997 |
| | | | CN | 1202286 A | 16-12-1998 |
| | | | EP | 0858698 A | 19-08-1998 |
| | | | JP | 11514804 T | 14-12-1999 |
| | | | NO | 981941 A | 29-06-1998 |

EPO FORM P0459

For more details about this annex : see Official Journal of the European Patent Office, No. 12/82